# EUROPEAN PATENT SPECIFICATION

(11) **EP 3 993 977 B1**
(45) Date of publication and mention of the grant of the patent: **18.12.2024**
(21) Application number: 20743176.8
(22) Date of filing: 24.06.2020
(51) Int. Cl.: B28B 7/00, B28B 7/36, B28B 23/00, B28B 23/02, B32B 1/00, B32B 9/00, B32B 9/04, B32B 13/04, B32B 13/12, B32B 27/40

(54) **METHOD FOR PRODUCING CONSTRUCTION ELEMENT**
VERFAHREN ZUR HERSTELLUNG EINES BAUELEMENTS
PROCÉDÉ DE FABRICATION D'UN ÉLÉMENT DE CONSTRUCTION

(30) Priority: 01.07.2019 FI 20195594
(43) Date of publication of application: 11.05.2022
(73) Proprietor: Stonelement Oy, 35220 Eräjärvi (FI)
(72) Inventor: VUOHELAINEN, Teppo, 35220 Eräjärvi (FI)
(74) Representative: Hovinen, Jari Juhani
(86) International application number: PCT/FI2020/050450
(87) International publication number: WO 2021/001598

(56) References cited:
- DE-A1- 2 604 227
- DE-A1- 2 604 227
- GB-A- 1 429 377
- GB-A- 1 429 377
- US-A- 3 839 519
- US-A- 3 839 519
- US-A- 5 236 975
- US-A- 5 236 975

## Description

### FIELD

The present invention relates to methods for producing construction elements, in particular to methods for producing construction elements comprising an outermost surface coated with natural stones or the like.

### BACKGROUND

Constructing a stone wall on location is costly, time consuming and leaves the site cluttered with piles of stone and other masonry construction materials and debris. It is also subject to weather conditions, which are unpredictable.

In order to avoid the above-mentioned problems, numerous methods for preparing prefabricated construction elements have been developed. For example, US 5,624,615 and US 9,975,272 disclose methods for producing reinforced construction elements, wherein natural stones are loaded on a bottom of a mould. Slits between the natural stones are filled with sand prior to installing reinforcing structures and to pouring concrete to the mould. FI 124044 discloses an alternative method for producing construction elements comprising mounting an arrangement comprising stone-based coating material pre-assembled on reinforcement means onto uncured self-compacting concrete.

SE 8800445L discloses a mould wherein natural unworked stones are pushed into a pliable foam rubber layer on the insides of the mould.

One challenge of the methods cited above is how to avoid leaking of wet concrete on the outermost surface of the construction element. This is a particular challenge when self-compacting concrete is used. Furthermore, the methods are suitable for producing construction elements wherein only one of their outermost surfaces is coated with natural stones. For making a two-sided stone wall by using construction elements produced by the methods described above, two construction elements has to be placed back to back.

US 3839519A discloses a method of making building panels adapted to form exterior enclosure of prefabricated homes. The building panels are a sandwich composed of masonry elements such as bricks, synthetic polyester mortar, reinforced wire mesh, a polymer foam, and a suitable inner facing layer, all held together by the mortar and foam.

US 5236975A discloses a method for producing a concrete product with surface decorations produced by affixing a concrete non-cure material the surface of the decorative material.

DE 2604227A1 discloses a method for producing patterned paving slabs with many ornamentations and divisions wherein the top layer of the slab is made up from a group of stones, or tiles. It discloses a method for producing a construction element, the method comprising steps of
a) providing a mould,
c) pouring to the mould an admixture comprising concrete to produce a concrete layer,
wherein d) for forming first outermost surface of the construction element
o providing an arrangement comprising
   - coating elements such as stones layered on reinforcement means,
   - an elastic member arranged on the layered coating elements,
o mounting the arrangement on the concrete layer, and
o removing the elastic member.

GB 1429377A discloses a method of producing outer layers in the surface of concrete bodies, wherein the method comprises releasably securing particles to a flexible carrier by partially embedding the particles in a synthetic resin material while it is in a soft or liquid state.

Thus, there is still need for further methods for producing construction elements.

### SUMMARY

The following presents a simplified summary in order to provide a basic understanding of some aspects of various embodiments of the invention. The summary is not an extensive overview of the invention.

In accordance with the invention, there is provided a new method for producing a construction element as disclosed in claim 1.

A number of exemplifying and non-limiting embodiments of the invention are described in accompanied dependent claims.

Various exemplifying and non-limiting embodiments of the invention and to methods of operation, together with additional objects and advantages thereof, are best understood from the following description of specific exemplifying embodiments when read in connection with the accompanying figures.

The verbs "to comprise" and "to include" are used in this document as open limitations that neither exclude nor require the existence of also unrecited features. Furthermore, it is to be understood that the use of "a" or "an", i.e. a singular form, throughout this document does not exclude a plurality.

### BRIEF DESCRIPTION OF FIGURES

The exemplifying and non-limiting embodiments of the invention and their advantages are explained in greater detail below with reference to the accompanying figures, in which
figure 1A shows the first stage of a non-limiting exemplary embodiment of a method of the present invention wherein two concrete sublayers have been poured to a mould,
figure 1B shows a non-limiting exemplary embodiment of the invention wherein the construction element includes two concrete sublayers separated by a heat isolating means,
figure 2 shows the second stage of a non-limiting exemplary embodiment of a method of the present invention wherein an arrangement including a first outermost surface of the construction element is produced,
figure 3 shows the third stage of a non-limiting exemplary embodiment of a method of the present invention wherein the arrangement of figure 2 is mounted on the concrete layer of figure 1A in the aid of a lifting means.
figure 4 shows the fourth stage of a non-limiting exemplary embodiment of a method of the present invention wherein the lifting means is removed, and the first outermost surface of the construction element is produced,
figure 5 shows an exemplary method for cleaning the construction element,
figure 6 shows the first stage of a non-limiting exemplary embodiment of a method of the present invention wherein the construction element is produced on a curved mould,
figure 7 shows an exemplary stage of a non-limiting embodiment of a method of the present invention wherein a curved arrangement comprising the first outermost surface of the construction element is mounted on a curved concrete layer,
figure 8 shows another exemplary stage of a non-limiting embodiment of a method of the present invention wherein a curved arrangement comprising the first outermost surface of the construction element has been mounted on a curved concrete layer,
figure 9 shows an exemplary non-claimed lifting means suitable for use in the method of the present invention, and
figure 10 demonstrate exemplary non-limiting engaging means of the non-claimed lifting means.

### DESCRIPTION

The specific examples provided in the description given below should not be construed as limiting the scope and/or the applicability of the appended claims. Lists and groups of examples provided in the description given below are not exhaustive unless otherwise explicitly stated.

The present invention relates to a method for producing a construction element which outermost surfaces comprise coating elements such as stones. The method comprises the following steps
a) providing a mould,
b) optionally pouring to the mould an admixture comprising basic concrete,
c) pouring to the mould an admixture comprising self-compacting concrete to produce a concrete layer and
d) for forming a first outermost surface of the construction element
   ∘ providing an arrangement comprising
      - coating elements such as stones layered on reinforcement means,
      - an elastic member arranged on the layered coating elements and protruded into slits between the coating elements,
   ∘ mounting the arrangement on the concrete layer, and
   ∘ removing the elastic member.

For illustrative purposes the method has been divided in different stages shown in the figures.

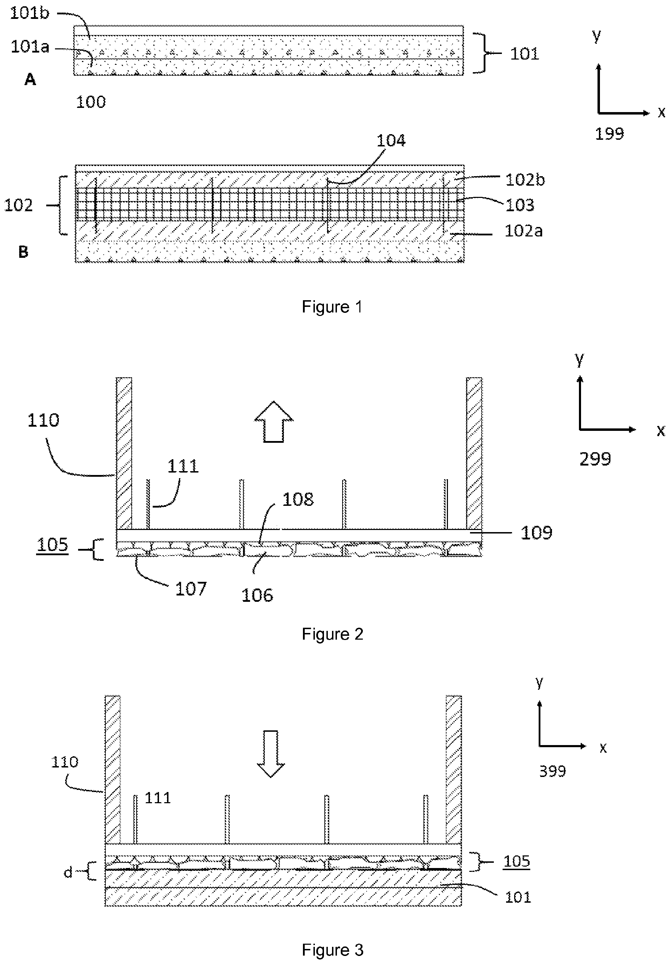

The first stage of the method comprising steps a) - c) is shown in figure 1A and 1B as non-limiting exemplary embodiments. Accordingly, an admixture comprising self-compacting concrete is poured to the mould 100 to produce a concrete layer 101. The admixture may consist of self-compacting concrete, or it can comprise a mixture of self-compacting concrete and one or more basic concretes. Self-compacting concrete is liquid, cohesive concrete with the ability to condense without gravity and without traditional concrete vibration (The European Guidelines for Self-Compacting Concrete. Specification, Production and Use; http://www.efnarc.org/pdf/SCCGuidelinesMay2005.pdf). A particular self-compacting concrete comprises aluminate cement. The self-compacting concrete forms also a surface suitable for forming the first outermost surface of the construction element.

The concrete layer may comprise two or more concrete sublayers, but the uppermost sublayer in the mould comprises self-compacting concrete.

According to a particular embodiment the method comprises pouring to the mould prior to step c) an admixture comprising basic concrete. A basic concrete comprises general purpose cement, such as general-purpose Portland cement or general-purpose blended cement. General-purpose blended cements contain typically Portland cement and more than 5% of either fly ash, ground slag, amorphous silica or a combination of these. Other components of the basic concrete are water and aggregates such as sand and crushed rocks.

According to this embodiment for producing the concrete layer 101 the method comprises
▪ pouring to the mould an admixture comprising basic concrete to produce a first concrete sublayer 101 a, and
▪ pouring onto the first concrete sublayer an admixture comprising self-compacting concrete.

Thus, the concrete layer 101 consists of two concrete sublayers 101a and 101b comprising basic concrete and self-compacting concrete, respectively. The use of a layer of basic concrete below a layer of self-compacting concrete is preferable when the second outermost surface of the construction element is not modified.

According to a particular embodiment recycled material is admixed the concrete of step b) and/or c). Exemplary recycled material include crushed rubber, crushed plastics, crushed burned clinker, crushed asphalt, crushed concrete and crushed bricks. Also, various crushed polymers, preferably crushed recycled polymers can be admixed to the concrete.

According to another embodiment, the concrete layer 102 comprises two concrete sublayers 102a, 102b, and a heat insulating means 103 therebetween. The concrete layers are engaged to each other with plurality of shafts, one of which is presented in figure 1B with reference number 104. According to this embodiment the method comprises for producing the concrete layer 102
▪ pouring to the mould a first admixture comprising concrete to produce a first concrete sublayer 102a, and
▪ arranging a heat insulating means 103 on the first concrete sublayer,
▪ pouring an admixture comprising self-compacting concrete on the heat insulating means, and preferably
▪ engaging the first concrete sublayer to the second concrete sublayer.

The first concrete layer and the second concrete layer can be made of same or different type of concrete. At least the second concrete sublayer 102b comprises self-compacting concrete.

The first outermost surface of the construction element comprises coating elements such as stones, preferably natural stones. Accordingly, slits between the coating elements cannot be avoided.

Figure 2 shows an arrangement 105 comprising coating elements 106 such as stones layered on reinforcement means 107 and an elastic member 108 arranged on the layered coating elements and protruded to slits between the coating elements. In order to protrude to the slits between the coating elements, the elastic member is pressed between the layered coating elements and a non-elastic member 109.

The arrangement is preferably provided in the aid of a lifting means 110 comprising the non-elastic member and plurality of rods adapted to be engaged to the reinforcement means. One of the rods is marked in figure 2 with reference number 111. The rods can be engaged to the reinforcement means mechanically or magnetically. When magnetism is used, the lifting means includes preferably an electromagnet, and the rods and the reinforcement means are made of ferromagnetic material such as steel or iron. According to another embodiment, the magnet is a permanent magnet such as neodymium magnet.

According to an exemplary embodiment the providing of the arrangement 105 comprises the following steps:
∘ layering the coating elements 106, such as stones to a reinforcement means 107,
∘ arranging an elastic member 108 on the layered coating elements,
∘ providing a lifting means 110 comprising plurality of rods 111,
∘ engaging plurality of rods 111 to the reinforcement means, and
∘ pressing the elastic member between the layered coating elements and a non-elastic member 109 by pulling the plurality of rods towards the non-elastic member i.e. in y-direction of the coordinate system 299 so that the elastic member protrudes to the slits between the coating elements.

The pulling direction is shown in figure 2 also with an arrow.

According to a preferable embodiment the lifting means comprises an electromagnet and the plurality of rods and the reinforcement means are made of ferromagnetic material such as iron or steel. Accordingly, the engaging and releasing the plurality of rods from the reinforcement means is performed by switching on and off the electromagnet, respectively.

The coating elements are preferably stones, more preferably natural stones. Exemplary natural stones are marble, granite, diabase, feldspar, flintstone and basalt. A preferable natural stone is slate. Also, artificial stones made from recycled materials such as recycled glass, crushed bricks and crushed concrete can be used as coating elements.

The reinforcement means is preferably made of ferromagnetic material such as iron or steel. An exemplary reinforcement means is a typical reinforcement mesh. Another exemplary reinforcement means is a fiber, preferably steel fiber or plastic fiber.

The elastic member may be made of any elastic material such as foam plastic, silicone and Styrofoam. A particular elastic material is foam plastic.

The non-elastic member may be made of any material which is less elastic than the elastic material. Preferable non-elastic materials are steel, aluminum and iron. Further exemplary non-elastic members are plates made of plastic and plywood. According to a particular embodiment the non-elastic member is part of the lifting means. According to another particular embodiment also the elastic member is part of the lifting means.

The next stage, shown in figure 3, comprises mounting the arrangement 105 on the concrete layer 101 using the lifting means 110. The mounting is performed before the concrete has cured. The arrangement is submerged to predetermined depth d to the concrete layer by moving the lifting means in (-)-y-direction of the coordinate system 399. Since the elastic member fills any slits between the layered coating elements, the uncured concrete does not leak to the first outermost surface of the construction element.

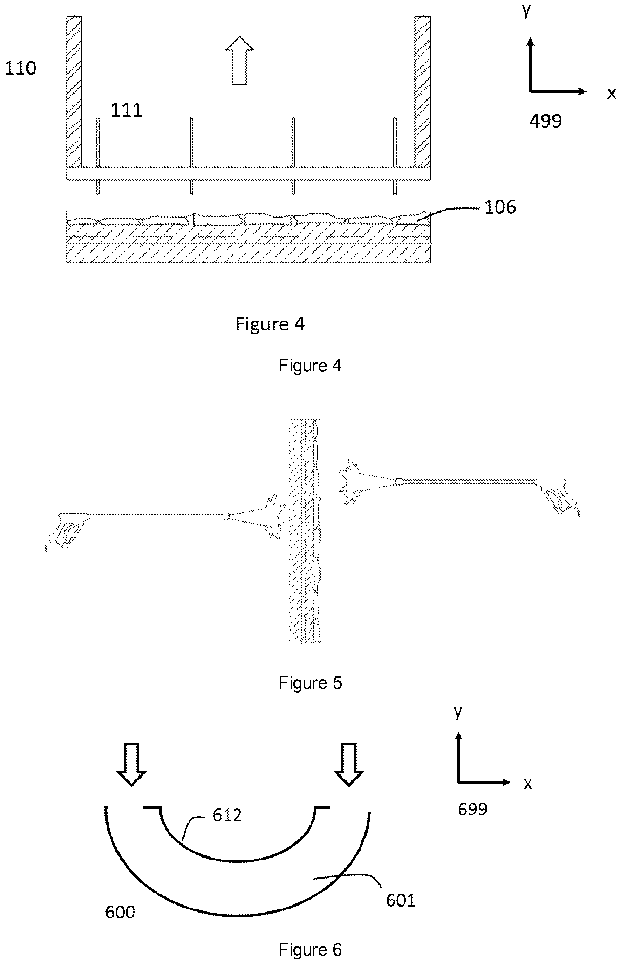

The next stage, shown in figure 4, comprises moving the lifting means 110 in y-direction of the coordinate system 499, releasing the rods 111 from the reinforcement means, and removing the elastic member from the first outermost surface. Final steps of the method include removing the construction element from the mould and cleaning the construction element e.g. by brushing and/or washing. An exemplary finishing by washing is shown in figure 5.

The method of the present invention is applicable also for producing construction elements wherein the second outermost surface is modified. Modification of the second outermost surface, i.e. the surface which is towards the bottom of the mould can be done by one of more methods known in the art.

According to one embodiment, the concrete is poured into a mould comprising 3D patterns. When the concrete has cured and the construction element has been removed from the mould, the 3D patterns of the mould are reproduced to the second outermost surface of the construction element.

According to another embodiment a membrane, such as a raster fabric comprising the desired pattern or image and a surface retarder is placed in the mould followed by pouring of the admixture comprising self-compacting concrete. The surface retarder is a material adapted to retard hydradation reaction of the concrete. According to one embodiment an area of the membrane comprising the pattern or image comprises the surface retarder. According to another embodiment the area of the membrane not comprising the pattern or image comprises the surface retarder. After the concrete has cured and the construction element is removed from the mould, the membrane is washed away, revealing a pattern or image that results from the contrast between the smooth cement surface and the exposed aggregate surface as depressions or humps in the second outermost surface of the construction element. Color pigments or aggregates of different colors can also be used in the concrete to further enhance a pattern or design.

According to still another embodiment stones, recycled materials such as crushed glass or pigments such as iron oxide is layered to the mould prior to step a). After the concrete is cured and the construction element has been removed from the mould, the material layered on the bottom of the mould is exposed.

The final steps of the method comprise typically removing the construction element from the mould, transferring to vertical arrangement and washing the outermost surfaces with water. The washing shown in figure 5 removes any filler materials or membranes or the like from the outermost surfaces. The washing can be done e.g. by using high pressure cleaners.

The mould does not need to be straight as in the embodiments disclosed above, but also non-straight moulds such as curved, concave and convex moulds can be used. When a non-straight mould is used in the method, all materials e.g. the coating elements, non-elastic members, elastic members, admixtures comprising self-compacting concrete and the reinforcement means disclosed above can be applied. The use of non-straight mould in the method has been demonstrated by exemplary non-limiting embodiments shown in figures 6-8.

Figure 6 shows an embodiment wherein an admixture comprising self-compacting concrete 601 has been poured into a curved mould 600. According to this embodiment, the mould has been covered by a curved lid 612, and the admixture has been poured to the mould through ends of the mould. The pouring direction is shown in figure 6 with arrows.

After the lid 612 has been removed, the first outermost surface is mounted on the concrete layer.

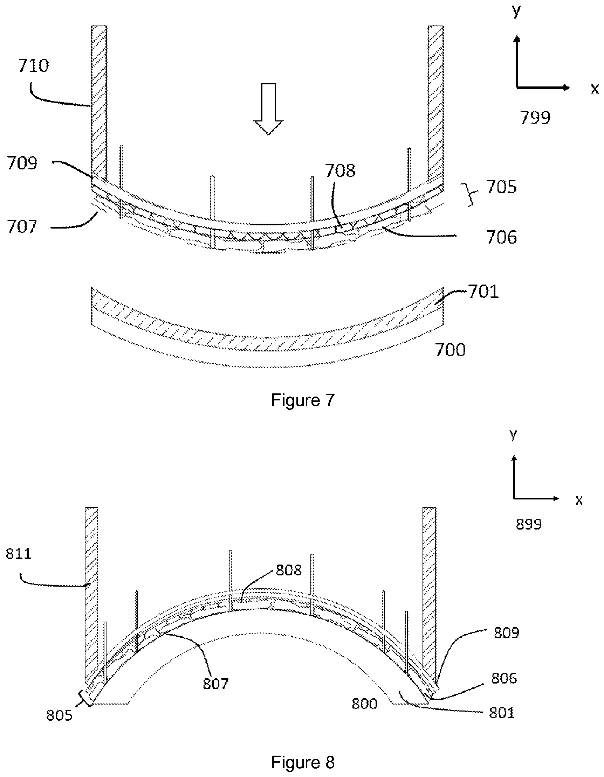

Figure 7 shows an exemplary curved arrangement 705 comprising coating elements 706 such as stones layered on reinforcement means 707 and an elastic member 708 is arranged on the layered first coating elements and protruded to the slits between the coating elements. The elastic member has been pressed between the layered coating elements and a non-elastic member 709. The figure shows also the mounting of the arrangement 705 on the curved concrete layer 701 using the lifting means 710. The mounting is performed before the concrete has cured. The arrangement is submerged to predetermined depth to the concrete layer by moving the lifting means in (-)-y-direction of the coordinate arrangement 799. Since the elastic member fills any slits between the layered coating elements, the uncured concrete does not leak to the first outermost surface of the construction element.

Figure 8 shows another curved arrangement 805 comprising the coating elements 806 such as stones layered on reinforcement means 807 and an elastic member 808 arranged on the layered coating elements and protruded to the slits between the coating elements. The elastic member has been pressed between the layered coating elements and a non-elastic member 809, and the arrangement has been mounted on a curved concrete layer 801.

According to a non-claimed embodiment the present disclosure concerns an arrangement 105 comprising
∘ coating elements 101 such as stones layered on a reinforcement means, and
∘ an elastic member 108 arranged on the layered coating elements and protruded into slits between the coating elements.

The coating elements of the arrangement are preferably stones, more preferably natural stones. Exemplary natural stones are marble, granite, diabase, feldspar, flintstone and basalt. A preferable natural stone is slate. Also, artificial stones made from recycled materials such as recycled glass, crushed bricks and crushed concrete can be used as coating elements.

The reinforcement means of the arrangement is preferably made of ferromagnetic material such as iron or steel. An exemplary reinforcement means is a typical reinforcement mesh. Another exemplary reinforcement means is a fiber, preferably steel fiber or plastic fiber.

The elastic member of the arrangement may be made of any elastic material such as foam plastic, silicone and Styrofoam. A particular elastic material is foam plastic. The arrangement can be straight such as 105, or non-straight such as 705 or 805. The use of an arrangement in the method has advantages. The elastic member of the arrangement prevents the self-compacting concrete from leaking to the outermost surface of the construction element during assembly. Furthermore, it prevents the coating elements from moving on the reinstatement means during transportation, mounting, vibrating and the like. This is important in particular when producing non-straight, such as curved, concave and convex construction elements. Still another advantage of the use of the arrangements is that they do not need to be assembled in the same site as the entire construction element. According to an exemplary embodiment plurality of arrangements are prepared on a quarry, stacked on each other, bundled, and transported to the final production site, where the bundles are removed, and the arrangements are used one by one in the method for producing construction elements as described above.

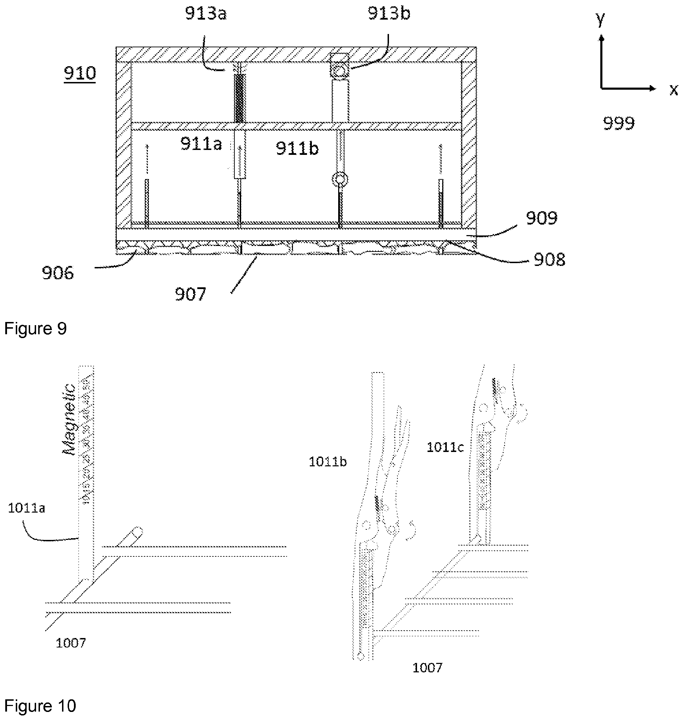

According to still another non-claimed embodiment the present disclosure concerns a lifting means suitable for use in the method. An exemplary lifting means is shown in figure 9, and its exemplary encaging means are shown in figure 10.

The lifting means 910 comprises plurality of rods, two of them are marked with reference numbers 911a and 911b. The rods are adapted to be engaged to the reinforcement means as described above. The lifting means comprises typically also means adapted to move the rods in ± y-direction of the coordinate system 999. The movement can be performed e.g. by threads 913a or by means 913b adapted to operate with pressurized gas or hydraulics.

According to a preferable embodiment the rods 1011a and the reinforcement means 1007 is made of ferromagnetic material such as steel or metal, and the lifting means comprises an electromagnet. The electromagnet is not shown in the figure. Thus, the engaging and releasing is performed by switching on and off the electromagnet. An exemplary engaging means of this type is shown in figure 10A. Another exemplary magnet is a neodymium magnet.

According to another embodiment the rods 1011b, 1011c are engaged to the reinforcement means 1007 mechanically. An exemplary mechanical engaging means is shown in figure 10B.

According to a preferable non-claimed embodiment the lifting means comprises means for adjusting how deeply the arrangement is submerged to the concrete layer. The means is exemplified in figure 10 by the numbered markings in the rod 1011a.

The finished construction elements can be used not only as vertical structures as walls pillars and fences but also in various horizontal structures such as stairs, walkways and driveways.

The specific examples provided in the description given above should not be construed as limiting the scope and/or the applicability of the appended claims.

## Claims

1. A method for producing a construction element, the method comprising the steps of
a) providing a mould (100, 700, 800),
b) optionally pouring to the mould an admixture comprising basic concrete,
c) pouring to the mould an admixture comprising self-compacting concrete to produce a concrete layer (101, 102, 701, 801) wherein
d) for forming a first outermost surface of the construction element
∘ providing an arrangement (105, 705, 805) comprising
• coating elements (106, 706, 806) such as stones layered on reinforcement means (107, 707, 807),
• an elastic member (108, 708, 808) arranged on the layered coating elements and protruded into slits between the coating elements,
∘ mounting the arrangement on the concrete layer, and
∘ removing the elastic member.

2. The method according to claim 1, wherein the admixture of step b) comprises general purpose cement such as Portland cement, water and aggregates.

3. The method according to claim 1 or 2 wherein the providing of step d) comprises
o layering the coating elements (106, 706, 806), such as stones on the reinforcement means (107, 707, 807),
o arranging the elastic member (108, 708, 808) on the coating elements,
o providing a lifting means (110, 710, 910) comprising a non-elastic member (109, 709, 809, 909) and plurality of rods (111, 711, 911a, 911b),
o engaging the plurality of rods to the reinforcement means, and
o pressing the elastic member between the layered coating elements and the non-elastic member by pulling the plurality of rods towards a non-elastic member in y-direction of the coordinate system (299, 799,999) so that the elastic member protrudes the slits between the coating elements.

4. The method according to claim 3 wherein the lifting means comprise an electromagnet, the plurality of rods are made of ferromagnetic material and the reinforcement means are made of ferromagnetic material, and wherein the engaging comprises turning on the electromagnet.

5. The method according to any of claims 1-4 wherein the mounting comprises submerging the arrangement to a predetermined depth d in the concrete layer.

6. The method according to any of claims 1-5 wherein the elastic member comprises foam plastic, Styrofoam or silicone, preferably foam plastic.

7. The method according to any of claims 1-6 wherein the coating elements are selected from natural stones preferably selected from marble, granite, diabase, feldspar, flintstone and basalt, or artificial stones made from recycled materials such as recycled glass, recycled crushed concrete, recycled crushed bricks.

8. The method according to any of claims 1-7 wherein the admixture of step b) and/or the admixture of step c) comprises one or more recycled materials preferably selected from crushed rubber, crushed plastics, crushed burned clinker, crushed asphalt, crushed bricks, crushed recycled concrete, and crushed recycled polymer.

9. The method according to any of claims 1-8 wherein the mould comprises 3D-patterns.

10. The method according to any of claims 1-8, comprising layering to the mould, prior to step c) and the optional step b) one or more of stones and/or recycled material preferably selected from crushed rubber, crushed plastics, crushed burned clinker, crushed asphalt, and crushed bricks, crushed recycled polymer.

11. The method according to any of claims 1-8 comprising layering to the mould, prior to step c) and the optional step b) a membrane comprising a pattern or image and a surface retarder.

12. The method according to any of claims 1-11 comprising removing the construction element from the mould, and preferably cleaning the construction element.

## Patentansprüche

1. Verfahren zum Herstellen eines Bauelements, wobei das Verfahren die folgenden Schritte umfasst:
a) Bereitstellen einer Form (100, 700, 800),
b) optionales Gießen einer Beimischung, die Basisbeton umfasst, in die Form,
c) Gießen einer Beimischung, die selbstverdichtenden Beton umfasst, in die Form, um eine Betonschicht (101, 102, 701, 801) herzustellen, wobei
d) zum Bilden einer ersten äußersten Oberfläche des Bauelements:
∘ Bereitstellen einer Anordnung (105, 705, 805), umfassend
• Verkleidungselemente (106, 706, 806) wie beispielsweise Steine, die auf Verstärkungsmittel (107, 707, 807) geschichtet werden,
• ein elastisches Bauteil (108, 708, 808), das auf den geschichteten Verkleidungselementen angeordnet ist und in Schlitze zwischen den Verkleidungselementen hineinragt,
∘ Befestigen der Anordnung auf der Betonschicht, und
∘ Entfernen des elastischen Bauteils.

2. Verfahren nach Anspruch 1, wobei die Beimischung aus Schritt b) Universalzement wie beispielsweise Portlandzement, Wasser und Zuschlagstoffe umfasst.

3. Verfahren nach Anspruch 1 oder 2, wobei das Bereitstellen des Schritts d) Folgendes umfasst:
∘ Schichten der Verkleidungselemente (106, 706, 806), wie beispielsweise Steine auf den Verstärkungsmitteln (107, 707, 807),
∘ Anordnen des elastischen Bauteils (108, 708, 808) auf den Verkleidungselementen,
∘ Bereitstellen eines Hebemittels (110, 710, 910), das ein nicht elastisches Bauteil (109, 709, 809, 909) und eine Vielzahl von Stäben (111, 711, 911a, 911b) umfasst,
∘ Ineingriffbringen der Vielzahl von Stäben mit den Verstärkungsmitteln, und
∘ Pressen des elastischen Bauteils zwischen den geschichteten Verkleidungselementen und dem nicht elastischen Bauteil, indem die Vielzahl von Stäben in eine Richtung eines nicht elastischen Bauteils in der y-Richtung des Koordinatensystems (299, 799, 999) gezogen wird, so dass das elastische Bauteil über die Schlitze zwischen den Verkleidungselementen hinausragt.

4. Verfahren nach Anspruch 3, wobei das Hebemittel einen Elektromagneten umfasst, die Vielzahl von Stäben aus ferromagnetischem Material hergestellt ist und die Verstärkungsmittel aus ferromagnetischem Material hergestellt sind, und wobei das Ineingriffbringen das Einschalten des Elektromagneten umfasst.

5. Verfahren nach einem der Ansprüche 1-4, wobei das Befestigen das Eintauchen der Anordnung bis zu einer vorbestimmten Tiefe d in die Betonschicht umfasst.

6. Verfahren nach einem der Ansprüche 1-5, wobei das elastische Bauteil Schaumstoff, Styropor oder Silikon, vorzugsweise Schaumstoff, umfasst.

7. Verfahren nach einem der Ansprüche 1-6, wobei die Verkleidungselemente aus Natursteinen, die vorzugsweise aus Marmor, Granit, Diabas, Feldspat, Feuerstein und Basalt ausgewählt sind, oder aus künstlichen Steinen ausgewählt sind, die aus recycelten Materialien wie beispielsweise recyceltem Glas, recyceltem zerkleinertem Beton oder recycelten zerkleinerten Ziegeln hergestellt sind.

8. Verfahren nach einem der Ansprüche 1-7, wobei die Beimischung aus Schritt b) und/oder die Beimischung aus Schritt c) ein oder mehrere recycelte Materialien umfasst, die vorzugsweise aus zerkleinertem Gummi, zerkleinertem Kunststoff, zerkleinertem gebranntem Klinker, zerkleinertem Asphalt, zerkleinerten Ziegeln, zerkleinertem recyceltem Beton und zerkleinertem recyceltem Polymer ausgewählt sind.

9. Verfahren nach einem der Ansprüche 1-8, wobei die Form 3D-Muster umfasst.

10. Verfahren nach einem der Ansprüche 1-8, das vor dem Schritt c) und dem optionalen Schritt b) das Schichten eines oder mehrerer Steine und/oder von recyceltem Material, das vorzugsweise aus zerkleinertem Gummi, zerkleinertem Kunststoff, zerkleinertem gebranntem Klinker, zerkleinertem Asphalt und zerkleinerten Ziegeln, zerkleinertem recyceltem Polymer ausgewählt ist, in die Form umfasst.

11. Verfahren nach einem der Ansprüche 1-8, das vor dem Schritt c) und dem optionalen Schritt b) das Schichten einer Membran, die ein Muster oder Bild und einen Oberflächenverzögerer umfasst, in die Form umfasst.

12. Verfahren nach einem der Ansprüche 1-11, das das Entfernen des Bauelements aus der Form und vorzugsweise das Reinigen des Bauelements umfasst.

## Revendications

1. Procédé de fabrication d'un élément de construction, le procédé comprenant les étapes suivantes :
a) mise à disposition d'un moule (100, 700, 800),
b) versement optionnel d'un mélange comprenant du béton de base dans le moule,
c) versement d'un mélange comprenant du béton autocompactant dans le moule pour produire une couche de béton (101, 102, 701, 801), dans lequel
d) pour la formation d'une surface la plus extérieure de l'élément de construction
∘ mise à disposition d'un ensemble (105, 705, 805) comprenant
• des éléments de revêtement (106, 706, 806) tels que des pierres superposées sur des moyens de renforcement (107, 707, 807),
• un élément élastique (108, 708, 808) disposé sur les éléments de revêtement superposés et faisant saillie dans des fentes entre les éléments de revêtement,
∘ montage de l'ensemble sur la couche de béton, et
∘ retrait de l'élément élastique.

2. Procédé selon la revendication 1, dans lequel le mélange de l'étape b) comprend du béton polyvalent tel que du béton de Portland, de l'eau et des granulats.

3. Procédé selon la revendication 1 ou 2, dans lequel la mise à disposition de l'étape d) comprend
∘ la superposition des éléments de revêtement (106, 706, 806), tels que des pierres sur les moyens de renforcement (107, 707, 807),
∘ l'agencement de l'élément élastique (108, 708, 808) sur les éléments de revêtement,
∘ la mise à disposition de moyens de levage (110, 710, 910) comprenant un élément non-élastique (109, 709, 809, 909) et une pluralité de tiges (111, 711, 911a, 911b),
∘ l'engagement de la pluralité de tiges avec les moyens de renforcement, et
∘ le pressage de l'élément élastique entre les éléments de revêtement superposés et l'élément non-élastique en tirant la pluralité de tiges vers un élément non-élastique dans une direction y du système de coordonnées (299, 799, 999) de telle façon que l'élément élastique fait saillie dans les fentes entre les éléments de revêtement.

4. Procédé selon la revendication 3, dans lequel les moyens de levage comprennent un électroaimant, la pluralité de tiges sont constituées d'un matériau ferromagnétique, et dans lequel l'engagement comprend l'activation de l'électroaimant.

5. Procédé selon l'une quelconque des revendications 1 à 4, dans lequel le montage comprend l'immersion de l'ensemble à une profondeur d prédéterminée dans la couche de béton.

6. Procédé selon l'une quelconque des revendications 1 à 5, dans lequel l'élément élastique comprend du plastique mousse, du polystyrène ou du silicone, de préférence du plastique mousse.

7. Procédé selon l'une quelconque des revendications 1 à 6, dans lequel les éléments de revêtement sont sélectionnés parmi des pierres naturelles sélectionnées de préférence parmi le marbre, le granit, la diabase, le feldspath, le silex et le basalte, ou des pierres artificielles constituées de matériaux recyclés tels que le verre recyclé, le béton concassé recyclé, les briques concassées recyclées.

8. Procédé selon l'une quelconque des revendications 1 à 7, dans lequel le mélange de l'étape b) et/ou le mélange de l'étape c) comprend un ou plusieurs matériaux recyclés, sélectionnés de préférence parmi le caoutchouc concassé, les matières plastiques concassées, le clinker brûlé concassé, l'asphalte concassé, les briques concassées, le béton recyclé concassé, et le polymère recyclé concassé.

9. Procédé selon l'une quelconque des revendications 1 à 8, dans lequel le moule comprend des motifs en 3D.

10. Procédé selon l'une quelconque des revendications 1 à 8, comprenant la superposition dans le moule, avant l'étape c) et l'étape b) optionnelle, d'un ou de plusieurs parmi des pierres et/ou des matériaux recyclés, sélectionnés de préférence parmi le caoutchouc concassé, les matières plastiques concassées, le clinker brûlé concassé, l'asphalte concassé, et les briques concassées, le polymère recyclé concassé.

11. Procédé selon l'une quelconque des revendications 1 à 8, comprenant la superposition dans le moule, avant l'étape c) et l'étape b) optionnelle, d'une membrane comprenant un motif ou une image et un retardateur de surface.

12. Procédé selon l'une quelconque des revendications 1 à 11, comprenant le retrait de l'élément de construction hors du moule, et de préférence le nettoyage de l'élément de construction.
